# DEMANDE DE BREVET EUROPEEN

(11) **EP 0 967 814 A1**
(43) Date de publication de la demande: **29.12.1999**
(21) Numéro de dépôt: 99201880.4
(22) Date de dépôt: 14.06.1999
(51) Int. Cl.: H04Q 7/32

(54) **Appareil de communication mobile**

(30) Priorité: 23.06.1998 FR 9807916
(71) Demandeur: Koninklijke Philips Electronics N.V., 5621 BA Eindhoven (NL)
(72) Inventeur: Bruzzone, Raul, Société Civile S.P.I.D., 75008 Paris (FR)
(74) Mandataire: den Braber, Gerard Paul

(57) **Abrégé**

Un appareil de communication mobile (MCA) comprend une mémoire (MEM) pour stocker des données (CDATA) relatives au champ d'application géographique (COV) d'une norme de communication mobile selon laquelle l'appareil de communication mobile peut opérer. L'appareil de communication mobile (MCA) comprend une interface (INT) pour tirer de l'extérieur des données (PDATA) relatives à la situation géographique (LOC). L'appareil de communication mobile comprend un indicateur (IND) pour indiquer si l'appareil de communication mobile est utilisable ou non (U :Y/N) en se basant sur des données (CDATA) relatives au champ d'application géographique et des données (PDATA) relatives à la situation géographique. Une telle indication permet à l'utilisateur de déduire si, dans le cas où il ne réussit pas à établir une communication, un déplacement à proximité l'aidera à établir la communication. En outre, l'indication si l'appareil est utilisable ou non, peut être fournie en relativement peu de temps. Donc, l'appareil de communication mobile (MCA) décrit ci-dessus permet une meilleure satisfaction de l'utilisateur.

## Description

### DOMAINE TECHNIQUE

L'invention concerne la communication mobile comme, par exemple, la téléphonie mobile.

### ETAT DE LA TECHNIQUE ANTERIEURE

Le document Guide Utilisateur du téléphone mobile 'Fizz' commercialisé par Philips, contient les remarques suivantes dans la partie 'Utilisation optimale du téléphone' en page 22. Si la réception est nulle, les deux symboles d'indication de réception n'apparaissent pas et le message 'Pas de réseau' s'affiche. Vous êtes peut-être dans une zone où la réception est particulièrement mauvaise (dans un tunnel ou derrière un très haut bâtiment, par exemple). Déplacez-vous et essayez à nouveau.

### EXPOSE DE L'INVENTION

Un but de l'invention est de permettre une meilleure satisfaction de l'utilisateur d'un appareil de communication mobile.

L'invention prend les aspects suivants en considération. Si un appareil de communication mobile n'est pas utilisable à un certain endroit, ceci peut être dû au fait que des signaux de communications sont trop affaiblis par l'entourage. Dans ce cas, l'utilisateur peut se déplacer, comme suggéré par le document cité ci-dessus, jusqu'à se trouver dans un entourage qui n'affaiblit pas trop les signaux de communication. Toutefois, il est également possible qu'il n'y ait pas de partenaires de communication assez proches comme, par exemple, une station de base opérant selon la même norme de communication mobile (en anglais : mobile communication standard) que l'appareil. Dans ce dernier cas, l'utilisateur se déplacerait en vain une ou plusieurs fois jusqu'à ce qu'il soit lassé de se déplacer.

Selon un aspect de l'invention, un appareil de communication mobile comprend une mémoire pour stocker des données relatives au champ d'application géographique (en anglais : coverage area) d'une norme de communication mobile selon laquelle l'appareil de communication mobile peut opérer. L'appareil de communication mobile comprend une interface pour tirer de l'extérieur des données relatives à la situation géographique. L'appareil de communication mobile comprend un indicateur qui indique si l'appareil de communication mobile est utilisable ou non en se basant sur des données relatives au champ d'application géographique et des données relatives à la situation géographique.

Supposons qu'un tel appareil de communication mobile indique qu'il est utilisable tandis que l'utilisateur qui se trouve à un certain endroit ne réussit pas à établir une communication. Cette indication permet à l'utilisateur de savoir qu'un déplacement à proximité peut suffire pour établir une communication. Par contre, si l'appareil indique qu'il n'est pas utilisable, ceci permet à l'utilisateur de savoir qu'il serait généralement inutile de se déplacer à proximité ou même d'essayer d'établir une communication. Par conséquent, l'invention permet de réduire le nombre de déplacements inutiles ayant pour but d'établir une communication, ou même d'éviter de tels déplacements. Donc, l'invention permet une plus grande satisfaction de l'utilisateur.

Une autre raison pour laquelle l'invention permet une meilleure satisfaction de l'utilisateur est liée aux aspects suivants. Des données relatives à la situation géographique peuvent être tirées de l'extérieur dans un relativement bref délai. Par exemple, elles peuvent être tirées de l'extérieur par un récepteur qui reçoit des signaux du système 'Global Positioning System' (GPS) et en déduit des coordonnées géographiques. Ceci peut s'effectuer en relativement peu de temps. Pour indiquer si l'appareil de communication mobile est utilisable ou non, il suffit de lire dans la mémoire les données qui sont pertinentes selon la situation géographique en d'en déduire une conclusion. Ceci peut s'effectuer en relativement peu de temps, par exemple en utilisant un processeur assez performant. Donc, l'invention permet à l'utilisateur de connaître en relativement peu de temps si l'appareil de communication mobile est utilisable ou non. Ceci constitue une autre raison pour laquelle l'invention permet une plus grande satisfaction de l'utilisateur.

Selon un autre aspect de l'invention, un signal de transmission comprend des données relatives au champ d'application géographique d'une norme de communication mobile. Ceci permet à un appareil de communication mobile défini ci-dessus de recevoir un tel signal et de remplacer les données relatives au champ d'application géographique antérieurement stockées dans la mémoire, par les données transmises. Les données transmises peuvent inclure un changement de champ d'application géographique qui n'était pas inclus dans les données antérieurement stockées dans la mémoire. Ainsi, le signal défini ci-dessus permet de mettre à jour des données relatives au champ d'application d'une norme de téléphonie mobile. Donc, le présent aspect de l'invention contribue à indiquer d'une façon assez exacte si l'appareil de communication mobile est utilisable ou non.

L'invention et des caractéristiques additionnelles qui peuvent être utilisées avec avantage pour mettre en oeuvre l'invention, seront décrites ci-dessous plus en grand détail par référence à des figures.

### BREVE DESCRIPTION DES FIGURES

La Fig. 1 est un diagramme conceptuel illustrant des caractéristiques de base de l'invention selon la première revendication ;
Les Fig. 2 et 3 sont des diagrammes conceptuels illustrant des caractéristiques additionnelles selon la deuxième et troisième revendication respectivement ;
La Fig. 4 est un diagramme de bloc illustrant un exemple d'un téléphone mobile selon l'invention.
La Fig. 5 illustre un tableau d'accès radio contenu dans la mémoire du téléphone mobile illustré dans la Fig. 4.
La Fig. 6 illustre un tableau de configuration contenu dans la mémoire du téléphone mobile illustré dans la Fig. 4.
La Fig. 7 illustre une matrice de champ d'application géographique globale (en anglais ; global coverage matrix), contenue dans la mémoire du téléphone mobile illustré dans la Fig. 4.
La Fig. 8 illustre une matrice de champ d'application géographique par zones (en anglais : zone coverage matrix), contenue dans la mémoire du téléphone mobile illustré dans la Fig. 4.
La Fig. 9 illustre une matrice de champ d'application géographique selon un quadrillage (en anglais : square coverage matrix), contenue dans la mémoire du téléphone mobile illustré dans la Fig. 4.
La Fig. 10 est un diagramme fonctionnel (en anglais : flow chart diagram) illustrant une méthode selon laquelle le téléphone mobile illustré dans la Fig. 4 peut fonctionner.

### MODES DE REALISATION DE L'INVENTION

Les remarques suivantes concernent les signes de référence. Des entités similaires sont désignées par une référence par lettres identique dans toutes les figures. Plusieurs entités similaires peuvent apparaître dans une seule figure. Dans ce cas, un chiffre ou un suffixe est ajouté à la référence par lettres afin de distinguer entre des entités similaires. Le chiffre ou le suffixe peut être omis pour des raisons de convenance, ou il peut être remplacé par une astérisque dans le cas ou sa valeur n'importe pas (en anglais : do not care value). Ceci s'applique pour la description ainsi que pour les revendications.

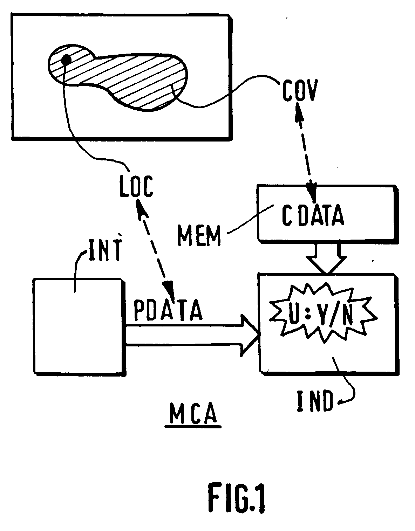

La Fig. 1 illustre des caractéristiques de base de l'invention. Un appareil de communication mobile MCA comprend une mémoire MEM pour stocker des données CDATA relatives au champ d'application géographique COV (en anglais : coverage area) d'une norme de communication mobile selon laquelle l'appareil de communication mobile peut opérer. L'appareil de communication mobile MCA comprend une interface INT pour tirer de l'extérieur des données PDATA relatives à la situation géographique LOC de l'appareil de communication mobile MCA. L'appareil de communication mobile MCA comprend un indicateur IND pour indiquer si l'appareil de communication mobile est utilisable ou non, U :Y/N, en se basant sur des données CDATA relatives au champ d'application géographique et des données PDATA relatives à la situation géographique.

Les aspects suivants ont été pris en considération pour mettre en oeuvre les caractéristiques illustrées par la Fig. 1. En principe, il est possible d'organiser les données CDATA relatives au champ d'application géographique COV de la manière suivante. On divise d'une façon fictive une étendue géographique, par exemple toute la terre ou une partie de la terre, en zones géographiques ayant sensiblement la même taille. Les données CDATA contiennent pour chaque zone géographique, un élément qui indique si la norme de communication mobile est appliquée dans cette zone ou non, par exemple en donnant à l'élément une valeur binaire 0 ou 1.

En pratique, le champ d'application géographique COV d'une norme de communication mobile aura une limite située dans certaines zones géographiques. Un élément associé à une telle zone géographique donnera une indication fausse : l'élément indiquera soit que la norme est appliquée dans la zone entière, soit que la norme n'est pas appliquée dans la zone entière tandis que ni l'un ni l'autre n'est vrai. Donc, les données CDATA relatives au champ d'application seront partiellement fausses. Plus petite sont les zones géographiques dans lesquelles on divise l'étendue géographique, plus petite est la partie fausse des données CDATA relatives au champ d'application géographique COV. Toutefois, plus petite sont les zones géographiques, plus nombreux seront les éléments des données CDATA relatives au champ d'application géographique COV et, par conséquent, plus grande doit être la mémoire MEM. Donc, il existe un compromis entre l'exactitude des données CDATA relatives au champ d'application géographique COV et la taille de la mémoire MEM dans laquelle les données CDATA sont stockées. Il est probable que, si les données CDATA doivent couvrir une étendue géographique assez large et en même temps être relativement exactes, les éléments seront si nombreux que la mémoire MEM sera trop chère pour certaines applications, notamment des applications de grand public.

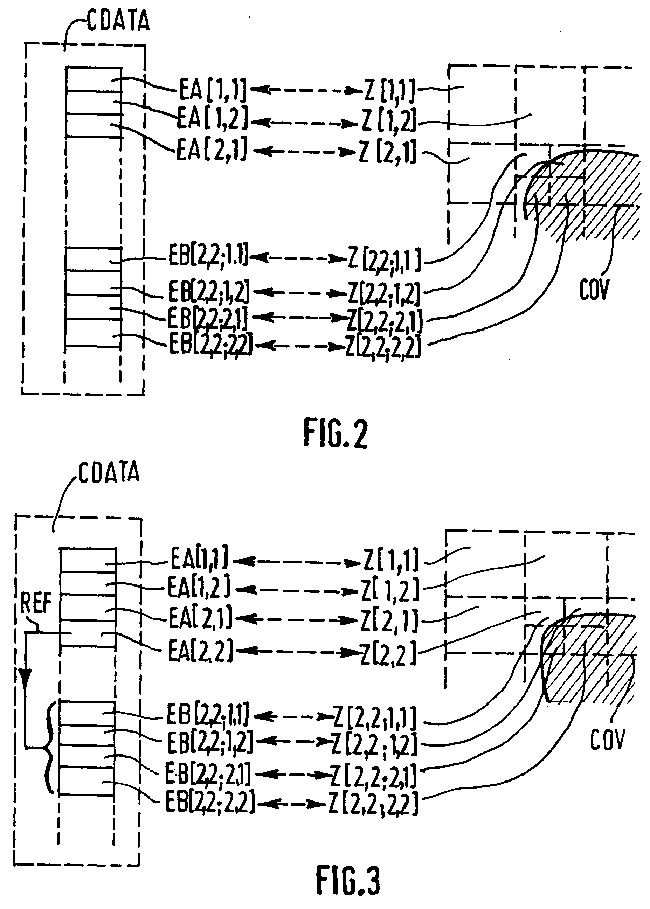

La Fig. 2 illustre les caractéristiques suivantes. Les données CDATA relatives au champ d'application géographique COV contiennent des éléments EA, EB de différents types. Chaque élément EA, EB est associé à une zone géographique spécifique Z dont la taille dépend du type de l'élément EA, EB.

Les caractéristiques illustrées dans la Fig. 2 produisent les effets avantageux suivants. Pour des situations géographiques relativement proches de la limite d'un champ d'application géographique COV, le champ peut être décrit par des éléments du type EB qui sont associés à des zones géographiques Z[*,* ;*,*] relativement petites. Ainsi, les données CDATA décrivent avec une relativement grande exactitude le champ d'application géographique COV. Pour des situations géographiques relativement loin de la limite du champ d'application COV, le champ peut être décrit par des éléments du type EA qui sont associées à des zones géographiques Z[*,*] relativement larges. Ainsi, les données CDATA peuvent décrire le champ d'application géographique COV avec relativement peu d'éléments. Donc, les caractéristiques illustrées dans la Fig. 2 permettent une description du champ d'application géographique COV avec une exactitude satisfaisante sans que la mémoire MEM dans laquelle on stocke les données CDATA relatives au champ d'utilisation géographique COV soit trop grande. Donc, les caractéristiques illustrées dans la Fig. 2 contribuent à mettre en oeuvre l'invention d'une façon économique.

Les aspects suivants ont été pris en considération pour mettre en oeuvre les caractéristiques illustrées par les Fig. 1 et 2. Il y a plusieurs façons pour trouver parmi les données relatives au champ d'application géographique CDATA, le ou les éléments EA, EB qui sont pertinents selon la situation géographique LOC. Par exemple, chaque élément EA, EB peut comprendre une description de la zone géographique Z à laquelle l'élément s'applique. Dans ce cas, une recherche séquentielle peut être faite sur la base des descriptions afin de trouver le ou les éléments EA, EB pertinents. Toutefois, cette méthode est relativement complexe et, par conséquent, elle risque de prendre relativement beaucoup de temps.

La Fig. 3 illustre les caractéristiques suivantes. Un élément EA[2,2] d'un type fait référence REF à un groupe d'éléments EB[2,2 ;*,*] d'un autre type. Les éléments EB[2,2 ; *,*] du groupe référencé sont associés à des zones géographiques Z[2,2 ;*,*] qui, en combinaison, correspondent sensiblement à la zone géographique Z[2,2] auquel l'élément EA[2,2] faisant référence est associé.

Les caractéristiques illustrées dans la Fig. 3 permet d'appliquer la méthode qui suit. Parmi les éléments EA associées aux zones géographiques Z[*,*] relativement larges, on sélectionne l'élément qui est pertinent selon la situation géographique LOC. Cette sélection est faite parmi relativement peu d'éléments et, par conséquent, elle est relativement simple et rapide. Dans le cas ou le champ d'application géographique COV ne couvre pas la zone géographique Z[*,*] associée à l'élément EA sélectionné, cet élément EA indique que la concernée n'est pas appliquée. Par contre, si le champ d'application géographique COV couvre cette zone géographique Z[*,*] au moins partiellement, l'élément EA sélectionné fait référence à des éléments EB décrivant plus en détail la partie concernée du champ d'application géographique COV.

Ensuite, parmi les éléments EB référencés, on sélectionne l'élément EB qui est pertinent selon la situation géographique LOC. Comme pour la sélection faite antérieurement, cette dernière sélection est relativement simple et rapide parce qu'elle est faite parmi relativement peu d'éléments. Ainsi, une ou plusieurs autre sélections peuvent être faites, jusqu'à on trouve l'élément pertinent associé à la zone géographique la plus petite. Donc, les caractéristiques illustrées dans la Fig.3 permettent d'appliquer une méthode qui contribue à faire connaître en relativement peu de temps si l'appareil de communication mobile est utilisable ou non.

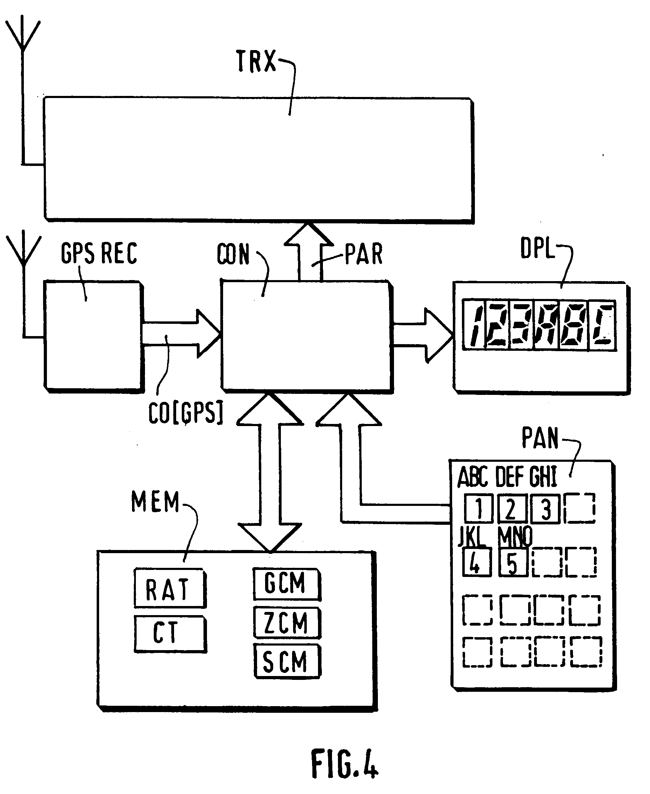

La Fig. 4 illustre un exemple d'un téléphone mobile selon l'invention qui reprend les caractéristiques illustrées dans les Figs. 1, 2 et 3. Le téléphone mobile est capable d'opérer selon plusieurs normes de téléphonie mobile comme par exemple les normes connues sous les abréviations GSM, DCS-1800 et AMPS.

Le téléphone mobile illustré par la Fig. 4 comprend un circuit de transmission et réception TRX pour des communications mobiles, un récepteur GPSREC, un écran d'affichage DPL, un panneau de contrôle PAN, un contrôleur CON et une mémoire MEM. Le circuit de transmission et réception TRX effectue les traitements nécessaires pour établir un lien de communication par voie hertzienne avec une station de base. Le récepteur GPSREC reçoit des signaux GPS et en déduit des coordonnées géographiques du type géodésique CO[GPS]. Le panneau de contrôle PAN permet à l'utilisateur de composer des mots de commande. L'écran d'affichage DPL affiche des caractères alphabétiques et numériques informant l'utilisateur sur l'état du téléphone mobile. Le contrôleur CON fournit des signaux de paramétrage PAR au circuit de transmission et réception TRX qui permettent d'adapter ce circuit à une parmi plusieurs normes de téléphonie mobile. En plus, le contrôleur CON envoie des signaux d'affichage à l'écran d'affichage DPL et reçoit des signaux de commande du panneau de contrôle PAN.

La mémoire MEM contient plusieurs types de données qui permettent au téléphone mobile de remplir des fonctions différentes. La mémoire MEM contient entre autres un tableau d'accès radio RAT qui constitue une liste des différentes normes de téléphonie mobile selon lesquelles le téléphone mobile illustré dans la Fig. 4 peut opérer. Pour chaque norme de téléphonie mobile, la mémoire MEM contient un tableau de configuration CT, une matrice de champ d'application globale GCM (en anglais : global coverage matrix), et une ou plusieurs matrices de champ d'application par zones ZCM (en anglais : zone coverage matrices) et un ou plusieurs matrices de champ d'application selon un quadrillage SCM (en anglais : square coverage matrices). Les deux types de tableaux RAT, CT et les trois types de matrices GCM, ZCM, SCM sont décrites ci-dessous plus en détail.

La Fig. 5 illustre un exemple du tableau d'accès radio RAT stocké dans la mémoire MEM. Le tableau comprend trois colonnes et des lignes dont le nombre N correspond au nombre des différentes normes selon lesquelles le téléphone mobile peut opérer. La colonne de gauche contient des descriptions des normes de téléphonie mobile. Les colonnes du milieu et de droite contiennent des pointeurs RAS qui respectivement pointent vers des tableaux de configuration CT et des matrices de champ d'application globales GCM. Chaque ligne appartient à une norme de téléphonie mobile. Donc, chaque ligne contient une description de la norme de téléphonie mobile auquel elle appartient, un pointeur RAS[*,1] qui pointe vers un tableau de configuration CT propre à la norme, et un pointeur RAS[*,2] qui pointe vers une matrice de champ d'application globale GCM propre à la norme.

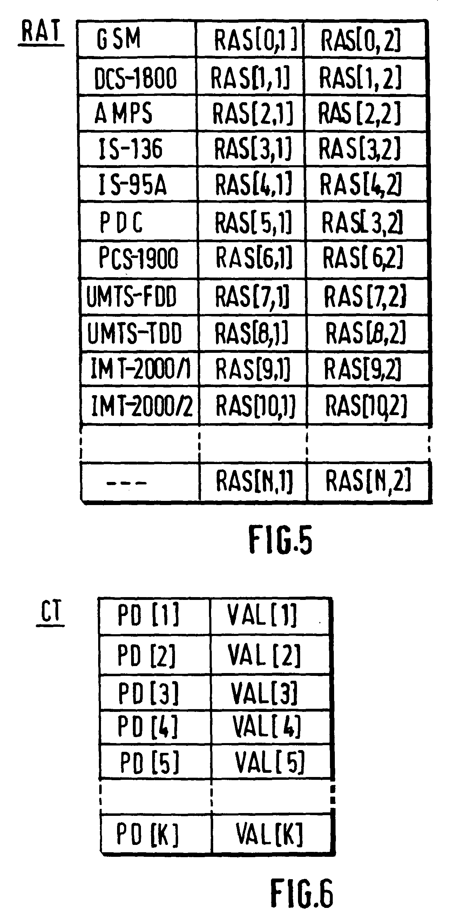

La Fig. 6 illustre un exemple d'un tableau de configuration CT. Le tableau de configuration CT contient deux colonnes et des lignes dont le nombre K correspond au nombre des différents paramètres pour configurer le circuit de transmission et réception TRX selon une norme de téléphonie mobile. La colonne de gauche contient des descriptions de paramètres PD et la colonne de droite contient des valeurs de paramètres VAL pour configurer le circuit de transmission et réception TRX selon la norme. Chaque ligne appartient à un différent paramètre PD. Donc, chaque ligne contient une description PD du paramètre auquel elle appartient, et la valeur VAL du paramètre.

Par exemple, le tableau de configuration CT peut comprendre des données comme décrit ci-dessous :
PD [1] = position d'un commutateur d'antenne
VAL[1] = 2
PD[2] = sélection d'un filtre d'entrée pour un circuit amplificateur de haute fréquence ;
VAL[2] = 2;
PD[3] = sélection d'un filtre de sortie pour le circuit amplificateur de haute fréquence ;
VAL[3] = 2
PD[4] = facteur de division d'un diviseur faisant partie d'un premier dispositif de conversion de fréquence ;
VAL[4] = 2018 ;
PD[5] = sélection d'un filtre de première fréquence intermédiaire ;
VAL[5] = 2
...

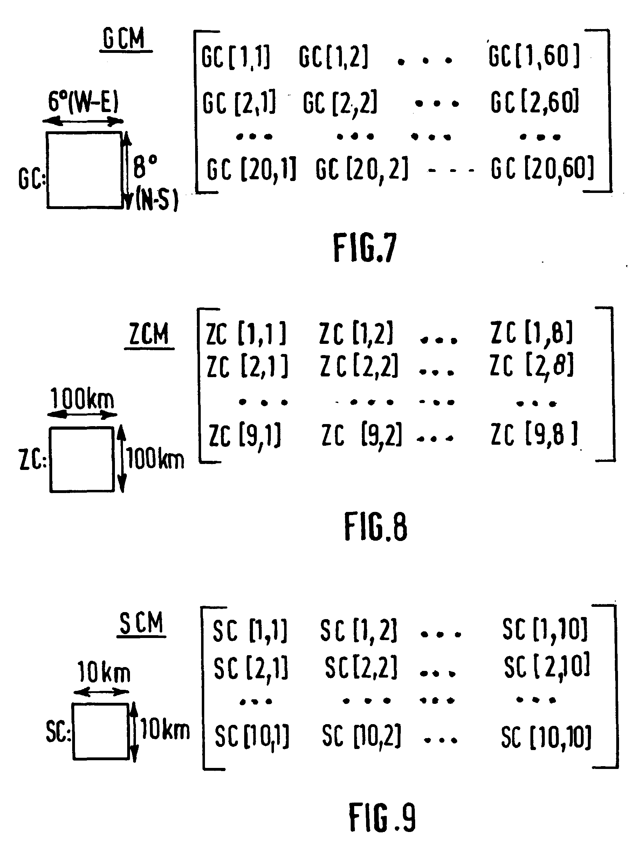

La Fig. 7 illustre un exemple de la matrice du champ d'application globale GCM. La matrice GCM illustrée dans la Fig. 7 contient 60 colonnes et 20 lignes et, par conséquent, 1200 éléments GC. Chaque élément GC est associé à une zone géographique différente obtenue par une division globale de la superficie de la terre selon la projection 'Mercator Transversal Universal Projection' (MTUP). La projection MTUP est recommandée par l'Association de Géodésie et Géophysique Internationale. Une zone géographique obtenue par cette division globale selon la projection MTUP fait 6 degrés en longitude et 8 degrés en latitude.

Chaque élément GC de la matrice du champ d'application globale GCM est un pointeur. Un élément GC pointe vers une matrice de champ d'application par zones ZCM si, dans la zone géographique à laquelle l'élément GC est associé, la norme de téléphonie mobile concernée est au moins partiellement appliquée. Cette matrice ZCM décrit plus en détail la disponibilité de la norme de téléphonie mobile dans la zone géographique associée à l'élément GC. Si, par contre, la norme de téléphonie mobile n'est pas appliquée dans cette zone géographique, l'élément GC pointe vers un drapeau qui indique que le champ d'application de la norme ne couvre pas cette zone géographique.

La Fig. 8 illustre un exemple d'une matrice de champ d'application par zones ZCM. La matrice ZCM illustrée dans la Fig. 7 contient 8 colonnes et 9 lignes et, par conséquent, 72 éléments ZC. Chaque élément ZC est associé à une zone géographique différente. Ces zones géographiques sont obtenues en divisant en zones selon la projection MTUP, la zone géographique associée a l'élément GC qui fait référence à la matrice ZCM. Les zones géographiques auxquelles sont associés les éléments ZC constituent des carrés de 100 km par 100 km. Il faut noter que le nombre d'éléments ZC contenu dans une matrice de champ d'application par zones ZCM, peut varier en fonction de l'élément GC faisant référence. Ceci est dû au fait que les zones géographiques auxquelles sont associés les éléments GC, n'ont pas toutes la même taille.

Chaque élément ZC de la matrice du champ d'application par zones ZCM est un pointeur. Un élément ZC pointe vers une matrice de champ d'application selon un quadrillage SCM si, dans la zone géographique à laquelle l'élément ZC est associé, la norme de téléphonie mobile concernée est au moins partiellement appliquée. Cette matrice SCM décrit plus en détail la disponibilité de la norme de téléphonie mobile dans la zone géographique associée à l'élément ZC. Si, par contre, la norme de téléphonie mobile n'est pas appliqué dans cette zone géographique, l'élément ZC pointe vers le drapeau qui indique que le champ d'application de la norme ne couvre pas cette zone géographique.

La Fig. 9 illustre un exemple d'une matrice de champ d'application selon un quadrillage SCM, à laquelle un élément ZC d'une matrice de champ d'application par zones ZCM peut faire référence. La matrice SCM illustrée par la Fig. 9 contient 10 colonnes et 10 lignes et, par conséquent, 100 éléments SC. Chaque élément SC est associé à une zone géographique différente, obtenue par quadrillage en zones géographiques de 10 km par 10 km de la zone géographique associée a l'élément SC qui fait référence à la matrice SMC. Chaque élément SC comprend un bit indicateur dont la valeur est 1 si le champ d'application géographique COV de la norme de téléphonie mobile couvre au moins une part de la zone géographique associée à l'élément ZC. Sinon, la valeur du bit indicateur est 0.

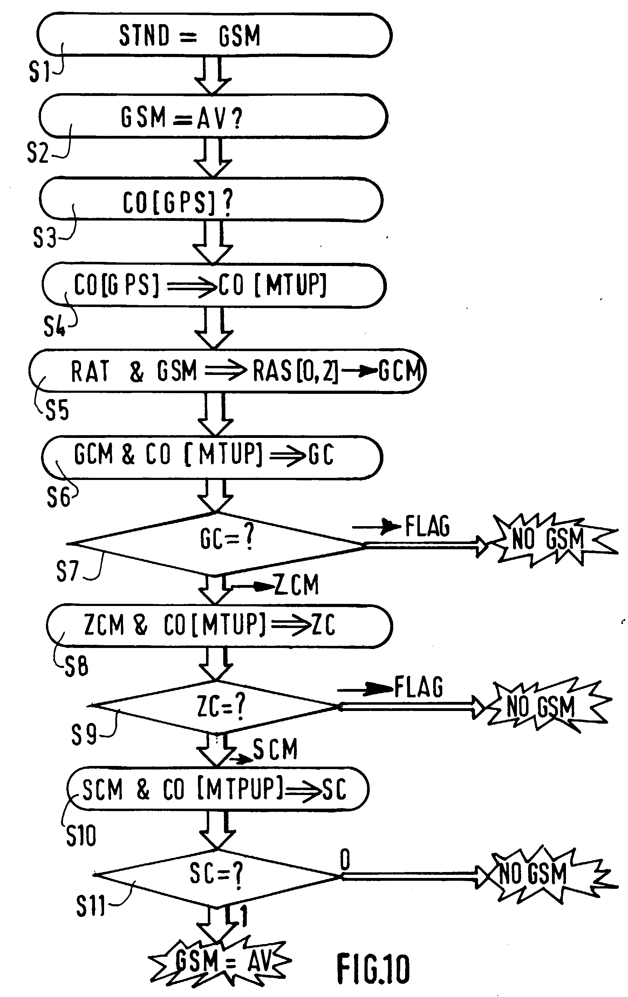

Fig. 10 illustre une manière selon laquelle peut opérer le téléphone mobile illustré par la Fig. 4 et dont la mémoire MEM contient des tableaux et matrices illustrées dans les Figs. 5-9. Dans une étape S1 un utilisateur fait connaître au contrôleur CON selon quelle norme de téléphonie mobile le téléphone mobile illustré dans la Fig. 4 doit opérer. L'utilisateur peut, par exemple choisir la norme GSM : STND = GSM, par l'intermédiaire du panneau de contrôle PAN. Dans une étape S2 l'utilisateur demande au téléphone mobile de lui faire connaître si la norme GSM est appliquée ou non : GSM = AV?. En réponse, dans une étape S3 le contrôleur CON recueille du récepteur GPS les coordonnées géographiques du type géodésique CO[GPS] définissant la situation géographique du téléphone mobile. Dans une étape S4, le contrôleur CON transforme les coordonnées géographiques du type géodésique CO[GPS] en coordonnées géographiques conformes à la projection MTUP : CO[MTUP].

Dans une étape S5, le contrôleur CON sélectionne, à partir du tableau d'accès RAT radio, la ligne propre à la norme GSM y compris le pointeur RAS[0,2] qui pointe vers la matrice de champ d'application globale GCM appartenant à la norme GSM. Dans une étape 56, le contrôleur CON sélectionne, à partir de cette matrice GCM, l'élément GC associé à la zone géographique dans laquelle se trouve le téléphone mobile. Le contrôleur sélectionne l'élément GC en se basant sur les coordonnées géographiques CO[MTUP], par exemple en les transformant en une adresse à laquelle l'élément GC est stocké. Dans une étape S7, le contrôleur CON évalue si l'élément GC pointe vers une matrice de champ d'application par zones ZCM, ou vers le drapeau FLAG indiquant que le champ d'application géographique ne couvre pas la zone géographique associée a l'élément GC sélectionné. Dans ce dernier cas, le contrôleur CON fait afficher sur l'écran d'affichage DPL que le téléphone mobile n'est pas utilisable selon la norme GSM : NO GSM.

On suppose que l'élément GC sélectionné pointe vers une matrice de champ d'application par zones ZCM. Ceci a comme conséquence que, dans une étape S8, le contrôleur CON sélectionne, à partir de cette matrice ZCM, l'élément ZC associé à la zone géographique dans laquelle se trouve le téléphone mobile. Le contrôleur sélectionne l'élément ZC en se basant sur les coordonnées géographiques CO[MTUP], par exemple en les transformant en une adresse à laquelle l'élément ZC est stocké. Dans une étape S9, le contrôleur CON évalue si l'élément ZC sélectionné pointe vers une matrice de champ d'application selon un quadrillage SCM, ou vers le drapeau FLAG indiquant que le champ d'application géographique ne couvre pas la zone géographique associée a l'élément ZC sélectionné. Dans ce dernier cas, le contrôleur CON fait afficher sur l'écran d'affichage DPL que le téléphone mobile n'est pas utilisable selon la norme GSM : NO GSM.

On suppose que l'élément ZC sélectionné pointe vers une matrice de champ d'application selon un quadrillage SCM. Ceci a comme conséquence que, dans une étape S10, le contrôleur CON sélectionne, à partir de cette matrice SCM, l'élément SC associé à la zone géographique dans laquelle se trouve le téléphone mobile. Le contrôleur sélectionne l'élément SC en se basant sur les coordonnées géographiques CO[MTUP], par exemple en les transformant en une adresse à laquelle l'élément SC est stocké. Dans une étape S11 le contrôleur évalue quelle est la valeur du bit indicateur de l'élément SC sélectionné. Si le bit indicateur de l'élément SC est 1, le contrôleur CON fait afficher l'écran d'affichage DPL que le téléphone mobile est utilisable selon la norme GSM : GSM=AV. Par contre, si le bit indicateur est 0, le contrôleur fait afficher que le téléphone mobile n'est pas utilisable selon la norme GSM : NO GSM.

Si le bit indicateur de l'élément SC est 1, une étape a lieu dans laquelle le contrôleur CON va configurer le circuit de transmission et réception TRX selon la norme GSM en lui fournissant des signaux de paramétrage PAR appropriés. Afin que ceci puisse s'effectuer, le contrôleur CON recueille les valeurs de paramètres VAL contenus dans le tableau de configuration CT propre à la norme GSM. Le contrôleur CON sélectionne ce tableau de configuration CT en utilisant le pointeur RAS[0,1] dans le tableau d'accès radio RAT. Ce pointeur RAS[0,1] peut être recueilli en même temps que le pointeur RAS[0,2] dans l'étape S5 décrite ci-dessus.

De préférence, le téléphone mobile illustré par la Fig. 4 met à jour régulièrement les matrices de champ d'application GCM, ZCM et SCM. Ceci peut s'effectuer par l'intermédiaire d'un ou plusieurs centres d'information qui tiennent à jour une base de données relative aux champs d'application géographiques d'une ou plusieurs normes de téléphonie mobile. De préférence, cette base de données contient des matrices de champ d'application ayant le même format que celles décrites ci-dessus.

Le téléphone mobile illustré dans la Fig. 4 peut effectuer une mise à jour des matrices de champ d'application GCM, ZCM et SCM de la manière suivante. Le téléphone mobile contacte régulièrement un centre d'information qui tient à jour une base de données relative au champ d'application géographique d'une ou plusieurs normes. Il vérifie si les matrices de champ d'application GCM, ZCM et SCM sont de la dernière version. Dans ce cas, la mise à jour est terminée. Sinon, le téléphone mobile remplace les éléments des matrices de champ d'application GCM, ZCM et SCM qui ont été modifiés.

Il faut noter qu'il y a de nombreuses façons selon lesquelles le téléphone mobile peut contacter un centre d'information. Par exemple, le téléphone mobile peut contacter un centre d'information par voie hertzienne en utilisant le circuit de transmission et réception TRX. A cet égard, il est noté que plusieurs normes de téléphonie mobile permettent d'établir des communications de données dédiées. Par exemple, la norme GSM est équipée d'un 'Global Packet Radio System' qui permet une communication de données ayant un débit jusqu'à 115kbits/s. Le centre d'information peut être contacté, par exemple, par l'intermédiaire du réseau Internet.

Comme il a déjà été énoncé, le téléphone mobile illustré dans la Fig. 4 reprend les caractéristiques illustrées dans les Figs. 1, 2 et 3. En ce qui concerne les caractéristiques illustrées dans la Fig. 1, ce qui suit est constaté. Le téléphone mobile contient une mémoire MEM pour stocker des matrices GCM, ZCM et SCM qui, dans leur ensemble, constituent des données relatives aux champs d'application géographique des normes de téléphonie mobile GSM, DCS-1800, AMPS, ... selon lesquelles le téléphone mobile peut opérer. Le téléphone mobile contient un récepteur GPSREC qui constitue une interface pour tirer de l'extérieur des coordonnées géographiques CO constituant des données relatives à la situation géographique du téléphone mobile. Le téléphone mobile contient un contrôleur CON et un écran d'affichage DPL qui, dans leur ensemble, constituent un indicateur pour indiquer si l'appareil de communication mobile est utilisable ou non en se basant sur des données relatives aux champs d'application géographique et des données relatives à la situation géographique.

En ce qui concerne les caractéristiques illustrées par la Fig. 2, ce qui suit est constaté. Les éléments des matrices GCM, ZCM et SCM, constituent des données relatives aux champs d'application géographique de différents types. Chaque élément GC, ZC, SC d'une matrice GCM, ZCM, SCM, respectivement, est associé à une zone géographique spécifique dont la taille dépend du type de l'élément GC, ZC ou SC.

En ce qui concerne les caractéristiques illustrées par la Fig. 3, ce qui suit est constaté. Un élément GC d'une matrice GCM fait référence à une matrice ZCM. Ce dernier constitue un groupe d'éléments ZC d'un type autre que le type de l'élément GC faisant référence. Les éléments ZC de la matrice ZCM référencée, sont associé à des zones géographiques qui, en combinaison, correspondent sensiblement à la zone géographique auquel l'élément GC faisant référence est associé.

Les figures et leur description ci-dessus illustrent l'invention plutôt que la limitent. Il est évident qu'il existe de nombreuses alternatives qui entrent dans la portée des revendications ci-jointes. A cet égard quelques remarques sont faites en conclusion.

Les entités fonctionnelles ou fonctions peuvent être réparties de nombreuses manières différentes. A cet égard, il faut noter que les figures sont très schématiques, chaque figure représentant uniquement une seule réalisation de l'invention. Donc, quoiqu'une figure montre des entités fonctionnelles en blocs séparés, ceci n'exclut pas du tout que plusieurs entités fonctionnelles soient présentes dans une seule entité physique.

Quoique la Fig. 10 illustre une méthode dans laquelle l'utilisateur définit une norme voulue, ceci n'exclut pas qu'une recherche des normes appliquées soit effectuée d'abord, après laquelle ces normes sont affichées afin que l'utilisateur puisse sélectionner la norme qui lui convient. D'une façon alternative, la sélection d'une norme appliquée peut s'effectuer automatiquement.

Quoique la Fig. 10 illustre une méthode dans laquelle un récepteur de signaux GPS tire de l'extérieur des données relatives à la situation géographique, ceci n'exclut pas d'autres moyens pour obtenir telles données. Par exemple, un système de téléphonie mobile par satellite peut comprendre des moyens pour localiser un téléphone mobile, afin qu'un satellite puisse braquer son antenne sur le téléphone mobile. Donc, un tel système de téléphonie connaîtra la situation géographique du téléphone mobile. Ce dernier peut comprendre un récepteur pour tirer des données relatives à sa situation géographique du système de téléphonie par satellite. D'une façon alternative, des données relatives à la situation géographique peuvent être tirées de l'extérieur par l'intermédiaire d'un clavier qui permet un utilisateur de faire connaître à l'appareil la situation géographique, par exemple en tapant le nom d'un lieu. Par exemple, en faisant référence au téléphone mobile illustré par la Fig. 4, le panneau de contrôle PAN peut comprendre un tel clavier et le contrôleur CON peut traduire le nom du lieu en coordonnées géographiques.

Finalement, aucun signe de référence entre parenthèses dans une revendication ne doit être interprété de façon limitative.

## Revendications

1. Appareil de communication mobile (MCA) comprenant:
- une mémoire (MEM) pour stocker des données (CDATA) relatives au champ d'application géographique (COV) d'une norme de communication mobile selon laquelle l'appareil de communication mobile (MCA) peut opérer ;
une interface (INT) pour tirer de l'extérieur des données (PDATA) relatives à la situation géographique (LOC) de l'appareil de communication mobile (MCA) ; et
- un indicateur (IND) pour indiquer si l'appareil de communication mobile (MCA) est utilisable ou non (U :Y/N) en se basant sur des données (CDATA) relatives au champ d'application géographique (COV) et des données (PDATA) relatives à la situation géographique (LOC).

2. Appareil de communication mobile selon la revendication 1 dans lequel les données (CDATA) relatives au champ d'application géographique (COV) contiennent des éléments (EA, EB) de différents types, chaque élément (EA, EB) étant associé à une zone géographique (Z) spécifique dont la taille dépend du type de l'élément (EA, EB).

3. Appareil de communication mobile selon la revendication 2 dans lequel un élément (EA) d'un type fait référence à un groupe d'éléments (EB) d'un autre type, les éléments (EB) de ce groupe étant associés à des zones géographiques (Z[2,2 ;*,*]) qui, en combinaison, correspondent sensiblement à la zone géographique (Z[2,2]) auquel l'élément (EA) faisant référence est associé.

4. Méthode pour gérer un appareil de communication mobile (MCA) comprenant une mémoire (MEM) pour stocker des données (CDATA) relatives au champ d'application géographique (COV) d'une norme de communication mobile, la méthode comprenant les étapes suivantes :
- tirer de l'extérieur des données (PDATA) relatives à la situation géographique (LOC) de l'appareil de communication mobile ;et
- indiquer si l'appareil de communication mobile est utilisable ou non (U :Y/N) en se basant sur des données (PDATA) relatives à la situation géographique et des données (CDATA) relatives au champ d'application géographique.

5. Méthode pour configurer un appareil de communication mobile (MCA) comprenant :
- une mémoire (MEM) ;
- une interface (INT) pour tirer de l'extérieur des données (PDATA) relatives à la situation géographique (LOC) de l'appareil de communication mobile (MCA) ; et
- un indicateur (IND) pour indiquer si l'appareil de communication mobile (MCA) est utilisable ou non (U :Y/N) en se basant sur des données (CDATA) relatives au champ d'application géographique (COV) et des données (PDATA) relatives à la situation géographique (LOC) ; la méthode comprenant l'étape suivante :
- écrire dans la mémoire (MEM) des données (CDATA) relatives au champ d'application géographique (COV) d'une norme de communication mobile.

6. Produit de programme d'ordinateur comprenant un jeu d'instructions pour effectuer une quelconque des méthodes selon les revendications 4 et 5.

7. Signal de transmission comprenant des données (CDATA) relatives au champ d'application géographique (COV) d'une norme de communication mobile, les données (CDATA) contenant des éléments (EA, EB) de différents types, chaque élément (EA, EB) étant associé à une zone géographique (Z) spécifique dont la taille dépend du type de l'élément (EA, EB).

8. Dispositif de stockage de données (MEM) comprenant des données (CDATA) relatives au champ d'application géographique (COV) d'une norme de communication mobile, les données (CDATA) contenant des éléments (EA, EB) de différents types, chaque élément (EA, EB) étant associé à une zone géographique (Z) spécifique dont la taille dépend du type de l'élément (EA, EB).
